# EUROPEAN PATENT APPLICATION

(11) **EP 1 085 395 A2**
(43) Date of publication of application: **21.03.2001**
(21) Application number: 00307908.4
(22) Date of filing: 13.09.2000
(51) Int. Cl.: G06F 1/00

(54) **Access control system for files on a memory card**

(30) Priority: 13.09.1999 US 394655
(71) Applicant: Phone.Com Inc., Redwood City, CA 94063 (US)
(72) Inventor: Gustafsson, Patrik G., Foster City, CA 94404 (US)
(74) Representative: Ablett, Graham Keith

(57) **Abstract**

A communication device (100) can receive a smart card (106) to be accessible by a client module (102) via a smart card interface (104). The smart card has a file system including a plurality of data files and a control file. The control information from the control file is then read and based on the file control information, it is determined whether data read from a data file is authorized to include the data type of the data read therefrom. When it is determined that the data file is not authorized to include the data type, the data type is discarded. The technique allows for over-the-air provisioning, alteration of carriers, services and protocols, availability of applications, and various others operations pertaining to the configuration of communication devices in a secure and controlled manner.

## Description

### BACKGROUND OF THE INVENTION

### 1. Field of the Invention

The present invention relates to communication devices and, more particularly, to configuration of communication devices.

### 2. Description of the Related Art

Today, various types of wireless communication devices are available. Examples of wireless communication devices include pagers, mobile phones, personal digital assistants (PDAs), palm-top computers, and electronic schedulers.

Communication devices include software modules that control the operation of the communication devices. Given that communication devices are designed to be capable of operating with various different types of networks, these communication devices must be configured or provisioned in order to properly operate with respect to particular networks. Once properly configured, a communication device is able to access (and execute) services provided by the network. Access refers to both connectivity and to application access. Connectivity provisioning of a communication device includes access parameters such as phone numbers to remote access servers (RAS), authentication parameters, Short Message Service Center (SMSC) addresses, Internet Protocol (IP) or Mobile Station Integrated System Digital Network (MSISDN) addresses of wireless access protocols (WAP) proxies. Without the connectivity and access parameters, it is impossible for the communication device to access services. Application provisioning includes configuration of higher level concepts such as application level access to resources, specific software modules, channels, etc. Application provisioning can be used to define whether a service is allowed at all and, if allowed, with what restrictions.

In some environments, communication devices can be pre-provisioned with connectivity configurations so that they are immediately able to access and execute services. However, more often the communication devices do not include such initial information and thus require that the configuration information be downloaded to the communication devices after the point of sales or the point of manufacturing. The communication information can be obtained by provisioning of the communication device using either a fixed link or an over-the-air mechanism. Still further, even after the communication devices are initially configured, it is often useful to have the ability to alter the configuration information during the lifetime of the communication device.

It has heretofore not been possible to allow flexible configuration alteration while also providing protection for the configuration information. As a result, conventional communication devices essentially had static configurations and lacked ability to flexibly alter their configurations and/or did not provide sufficient control and security.

Thus, there is a need for improved techniques for improved approaches to configuration of communication devices.

### SUMMARY OF THE INVENTION

Broadly speaking, the invention relates to improved techniques for controlled access to data stored in electronic files in a data storage device. The data stored on the data storage device is used by an electronic device. The data storage device can take a variety of different forms including a semiconductor data storage device (e.g., hard drive, removable storage medium, smart card, PCCARD). The electronic device can be a variety of devices including a communication device, a server machine, a computing device, etc. The improved techniques use an access control system to restrict access to the files and data stored in the files. The access control system uses both file system access control and application layer protections to provide the restricted access to the files and the data stored therein.

In one embodiment, the invention provides an easy way to configure and subsequently update such configuration in communication devices, namely, wireless communication devices. The invention is thus suitable to permit updating of configuration information of a communication device in a secure and controlled manner. The invention also allows for over-the-air provisioning, alteration of carriers, services and protocols, availability of applications, and various other operations pertaining to configuration of the communication devices.

The invention can be used in both fixed server and mobile client environments. In a server environment, the controlled file access provided by the invention can be used to control end user profiles, control server software profiles, etc. In a client environment, the controlled file access provided by the invention can be used to control service definitions, access parameters, application usage, etc.

The invention can be implemented in numerous ways including, a method, system, device, and a computer readable medium. Several embodiments of the invention are discussed below.

As a method for providing secure access to data stored in electronic files, the electronic files including a control file and at least one data files, one embodiment of the invention includes the acts of: reading file control information from a control file; reading data from a data file, the data having a data type associated therewith; determining, based on the file control information, whether the data file is authorized to include the data type of the data read therefrom; and discarding the data of the data type read from the data file when the determining has determined that the data file is not authorized to include the data type.

As a computer readable medium including computer program code for providing secure access to data stored in electronic files, one embodiment of the invention includes: computer program code configured to read file control information from a control file; computer program code configured to read data from a data file, the data having a data type associated therewith; computer program code configured to determine, based on the file control information, whether the data file is authorized to include the data type of the data read therefrom; and computer program code configured to discard the data of the data type read from the data file when it is determined that the data file is not authorized to include the data type.

As a smart card for use with a communication device, one embodiment of the invention includes: a file system including a plurality of data files and a control file; and a controller operatively connected to the file system. The controller operates to provide the communication device with access to the file system. To control access to information stored in the file system, access privileges to the control file are limited, and the control file includes control information that defines particular types of information that are authorized to be stored in the data files.

As a file access control system for a file system, one embodiment of the invention includes: a plurality of data files, each of the data files capable of storing one or more data items; one or more control files describing authorized data items with respect to each of the data files; and an interface that enables a processing unit to access the plurality of data files and the one or more control files.

As a data storage device for use with an electronic device, one embodiment of the invention includes a plurality of data files and a control file. Access privileges to the control file are limited, and the control file includes control information that defines particular types of information that are authorized to be stored in the data files.

The advantages of the invention are numerous. Different embodiments or implementations may yield one or more of the following advantages. One advantage of the invention is that access to data stored in data files can be controlled using one or more control files to define what type of data is permitted in the data files. Another advantage of the invention is that an electronic device (e.g., communication device) can use data files to store configuration information for the device and thus allow update to the configuration of the device by altering the data stored in one or more of the data files in a controlled manner. Still another advantage of the invention is that the invention facilitates configuring or reconfiguring an electronic device (e.g., communication device) after its manufacture or sale. Yet another advantage of the invention is that generic files can be used to store the necessary configuration data in a flexible and secure manner. Another advantage of the invention is that configuration responsibilities can be shared by user and administrator.

Other aspects and advantages of the invention will become apparent from the following detailed description taken in conjunction with the accompanying drawings which illustrate, by way of example, the principles of the invention.

### BRIEF DESCRIPTION OF THE DRAWINGS

The invention will be readily understood by the following detailed description in conjunction with the accompanying drawings, wherein like reference numerals designate like structural elements, and in which:
FIG. 1 is a diagram of a client device according to one embodiment of the invention;
FIG. 2 is a block diagram of a smart card according to one embodiment of the invention;
FIGs. 3A and 3B are flow diagrams of client device configuration processing according to one embodiment of the invention; and
FIG. 4 is a block diagram of a client device according to one embodiment of the invention.

### DETAILED DESCRIPTION OF THE INVENTION

The invention relates to improved techniques for controlled access to data stored in electronic files in a data storage device. The data stored on the data storage device is used by an electronic device. The data storage device can take a variety of different forms including a semiconductor data storage device (e.g., hard drive, removable storage medium, smart card, PCCARD). The electronic device can be a variety of devices including a communication device, a server machine, a computing device, etc. The improved techniques use an access control system to restrict access to the files and data stored in the files. The access control system uses both file system access control and application layer protections to provide the restricted access to the files and the data stored therein.

In one embodiment, the invention provides an easy way to configure and subsequently update such configuration in communication devices, namely, wireless communication devices. The invention is thus suitable to permit updating of configuration information of a communication device in a secure and controlled manner. The invention also allows for over-the-air provisioning, alteration of carriers, services and protocols, availability of applications, and various other operations pertaining to configuration of the communication devices. Using the invention, it is thus possible to combine write-protected and write-access information to create a partially controlled configuration environment using the controlled configuration environment to configure wireless communication devices.

The invention can be used in both fixed server and mobile client environments. In a server environment, the controlled file access provided by the invention can be used to control end user profiles, control of server software profiles, etc. In a client environment, the controlled file access provided by the invention can be used to control service definitions, access parameters, application usage, etc.

The configuration information can be stored in files having fields. Files can be easily defined with read and write access privileges, and the files (and directories) provide a good abstraction to divide information into protected and non-protected sections. The invention facilitates defining access rights on a per file basis and thus allows some of the elements to be given more access protection and some of the elements to be given less access protection.

Configuration protection requires trust in the file system so that access to the file where the fields are defined can be controlled. If a file can be written by someone, then he/she is also able to manipulate any piece of data in the file and thus alter the configuration. The invention uses both file system access control and application layer protections to provide the restricted access to the data in the files.

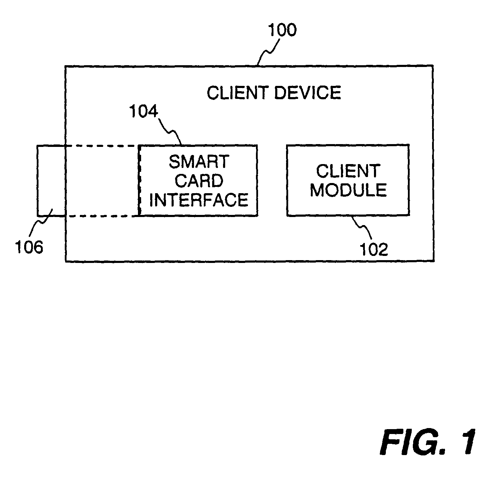

Embodiments of this aspect of the invention are discussed below with reference to FIGs. 1 - 4. However, those skilled in the art will readily appreciate that the detailed description given herein with respect to these figures is for explanatory purposes as the invention extends beyond these limited embodiments.

FIG. 1 is a diagram of a client device 100 according to one embodiment of the invention. The client device 100 is a communication device such as a wireless telephone, wireless pager, a personal digital assistant (PDA), etc.

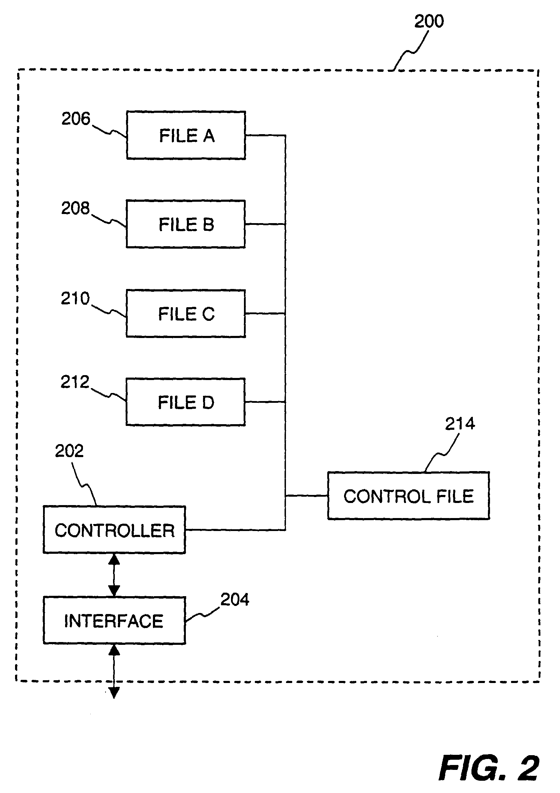

The client device 100 includes client module 102 and a smart card interface 104. The client module 102 is a programming module that includes programming instructions performed by the client device 100 in order to function as desired. The client module 102 interacts with a smart card 106 through the smart card interface 104. More particularly, the smart card 106, upon being inserted into an opening or spot of the client device 100, becomes accessible to the client module 102 via the smart card interface 104. The smart card 106 can provide digital logic and controllers as well as memory storage for data and programming instructions. According to the invention, the smart card 106 stores files containing configuration information (e.g., configuration files). The organization and control over the configuration files as well as the use of these configuration files by the client device are discussed in detail below with respect to FIGs. 2 - 4.

FIG. 2 is a block diagram of a smart card 200 according to one embodiment of the invention. The smart card 200 is, for example, suitable for use as the smart card 106 illustrated in FIG. 1.

The smart card 200 includes a controller 202 that manages the operation of the smart card 200. In one embodiment, the controller 202 can be a semiconductor integrated circuit chip that is provided on the smart card 200. The controller 202 manages access to information and resources provided on the smart card 200. Typically, the access to the information and resources is limited to secure at least some portion of the information or resources provided on the smart card 200.

The smart card 200 also includes an interface 204 that interfaces the controller 202 to the smart card interface 104 of the client device 100 that received the smart card 200. The interface 204 can be a hardware interface or software interface, or some combination of hardware and software.

Additionally, the smart card 200 includes a file system (or a resource system) that includes various files (or resources). In one implementation, the files provided in the file system on the smart card 200 provide configuration or provisioning information for use by the client device 100, i.e., a communication device. The file system provided within the smart card 200 includes, in one implementation, file A 206, file B 208, file C 210, file D 212, and a control file 214. The control file 214 is a secure file that identifies the particular type of configuration or provisioning information that can be provided in each of the files 206 - 212. Then, during use of the configuration or provisioning information provided by the file system on the smart card 200, the client device 100 is able to retrieve the configuration or provisioning in a secure manner.

The access rights for the control file 214 need to be very limited because access to the control file 214 provides access to all the files 206 - 212 which contain the configuration and provisioning information. The access rights can be set in a number of ways, including: operating system provided access privileges, data signed by certificates or any other security/encryption mechanism, hardcoded in the device, etc. The access rights to the files 206 - 212 can be similarly restricted if desired but typically have less restrictive or extensive access protection. For example, a user or third parties might have access rights to write to the files 206 - 212 but not to the control file 214. Instead, only an authorized network administrator would, for example, be able to write to the control file 214. Any user, third party or administrator would, for example, be able to read the files 206 - 212 and the control file 214. As another example, some of the files 206 - 212 a user or third party might have restricted write access provided by an operating system. In any case, the invention operates above and in addition to any access control provided by the operating system provided access privileges, certificates or any other security/encryption mechanism.

In one embodiment, the files 206 - 212 are configuration data files and the control file 214 is a configuration control file. The configuration information is stored in the files 206 - 212 and is thus stored in multiple files. The configuration information provided in the files 206 - 212 can be presented in a number of ways. For example, the configuration information can be presented in the files 206 - 212 as a descriptive language. As an example, the descriptive language can be a markup language where each file describes the content or information using a markup or tag-length-value method. The description language (e.g., XML, WBXML) defines elements, sub-elements and attributes which are used to describe characteristics of the configuration. The control file 214, or configuration control file, can similarly present configuration control information in a descriptive language.

The control file 214, or the configuration control file, can describe the allowed content of any of the configuration data files (files 206 - 212) or describe the relation (i.e., what data is allowed to be combined with what other data) between data defined in the configuration data files. The control file 214 can also describe the interrelationship between files 206 - 212 and data within the files 206 - 212. The data, or configuration data, stored in the files 206 - 212 can contain descriptions of data needed to use the device. For example, one of the files 206 - 212 might contain all the configuration data needed to use the service or might contain only part of the required configuration data. In cases where the file contains only partial descriptions of the needed configuration information, they can be logically linked with one or more other of the files 206 - 212.

According to the invention, all the data (configuration data) read from the files 206 - 212 is verified with a set of rules provided in the control file 214 (configuration control file). The rules provided in the control file 214 can apply to one or more of the files 206 - 212 of the file system. For example, if the rules of the control file 214 say that only configuration element X can reside in the file 206, then a definition of configuration element X is accepted as a valid configuration parameter when obtained from the file 206, but a definition of a configuration element Y is rejected when obtained from the file 206. For example, the rules provided in the control file 214 can be provided with descriptive semantics that allow reference to specific element types and, thus, to define the type of content that is allowed (or disallowed) in the files 206 - 212 of the file system.

Using the invention, it is thus possible to combine write-protected and write-access information to create a partially controlled configuration environment using the controlled configuration environment to configure wireless communication devices. In one implementation, the control file and the data files are provided in a markup language, namely eXtensible Markup Language (XML). By combining XML pages in write protected files with XML pages in write access files, a secure configuration context can be achieved.

As previously noted, the control file 214 and the files 206 - 212 can take many forms. Below are representative examples of a configuration file and a configuration control file in an XML format. The configuration file pertains to a communication device that has multiple access paths to a single proxy.

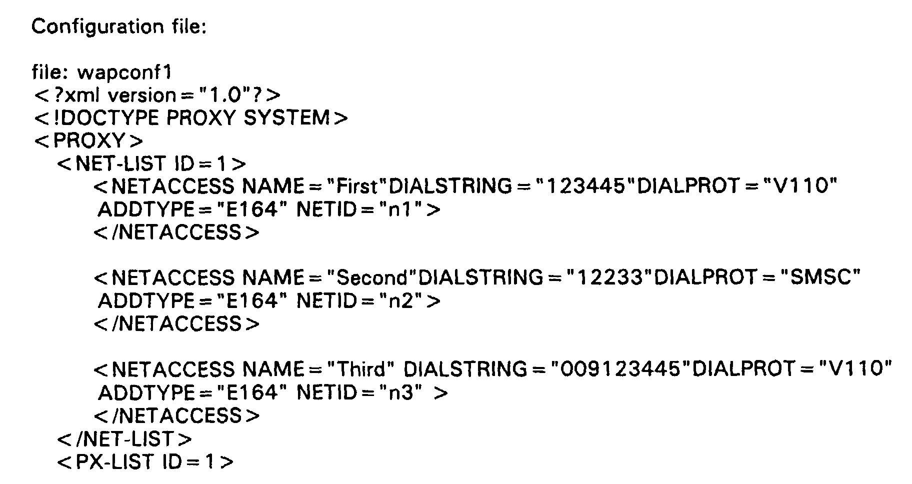

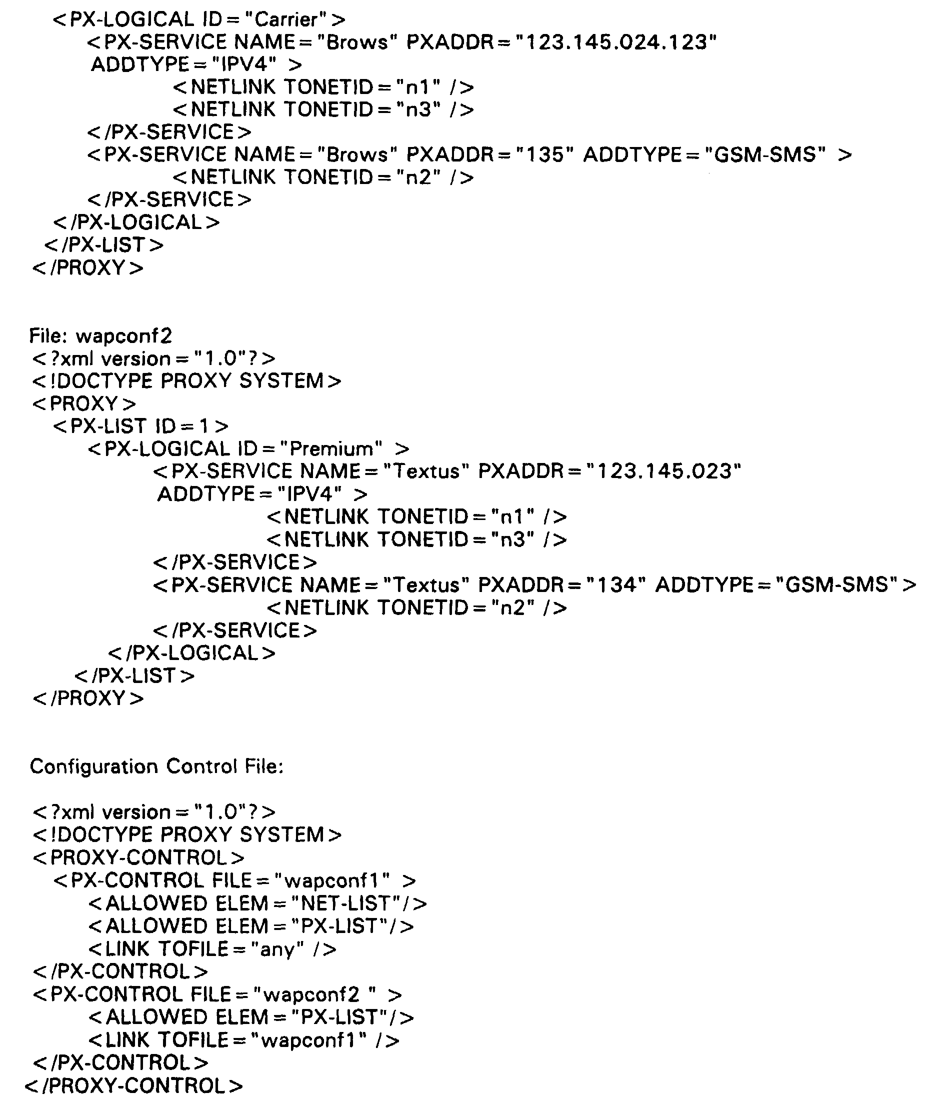

Although the data storage device discussed above in FIGs. 1 and 2 is a smart card, the data storage device need not be a smart card. For example, the data storage device could be a disk drive, a memory card (e.g., PCCARD), etc. The invention is also suitable for client device and server devices which sometimes use different data storage devices. In any case, when the data storage device does not include a controller such as a smart card, different mechanisms are used to protect the integrity of the control file. These mechanisms, for example, can include encryption, operating system write protection, and/or hard-coding.

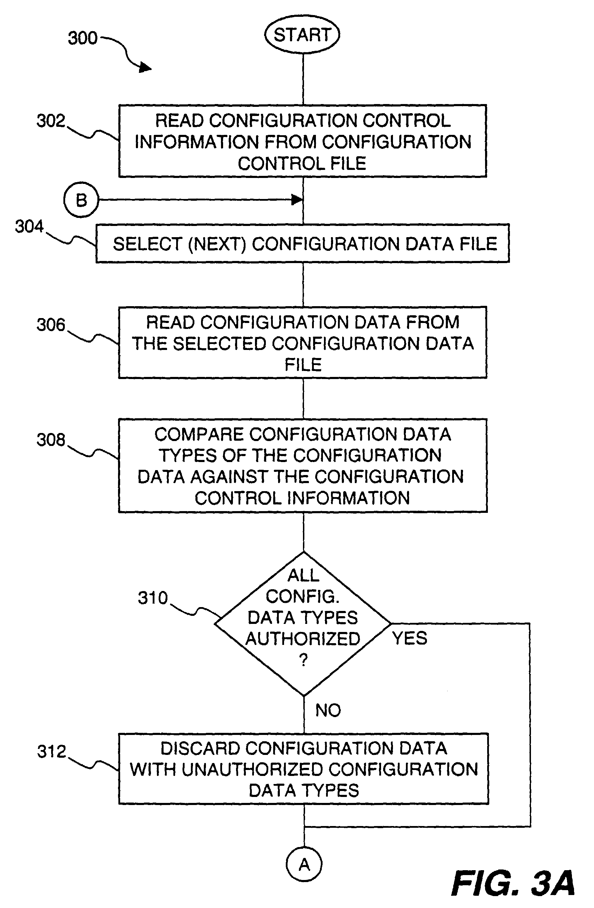

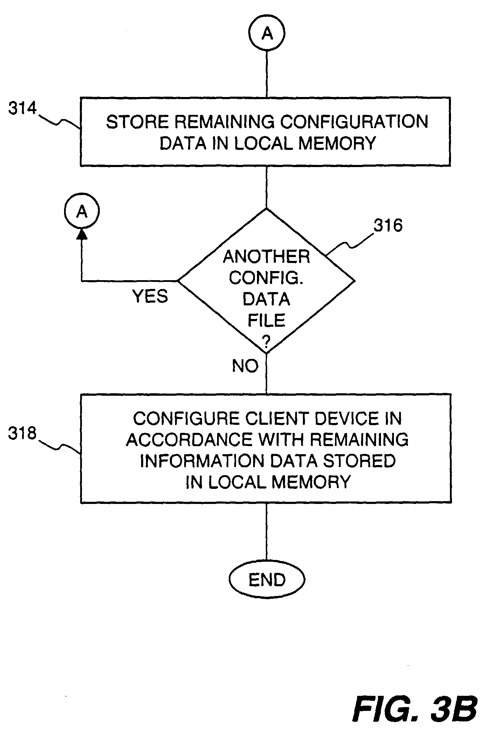

FIGs. 3A and 3B are flow diagrams of client device configuration processing 300 according to one embodiment of the invention. The client device configuration processing 300 is, for example, performed by the client module 102 of the client device 100 that is seeking to obtain configuration information from the smart card 106, 200.

The client device configuration processing 300 initially reads 302 configuration control information from a configuration control file. For example, the client module 102 would access the control file 214 through the interface 104, 204 and the controller 202 such as illustrated in FIG. 2. Next, one of the configuration data files is selected 304. Here, with respect to FIG. 2, one of the files 206 - 212 is selected to be processed.

After one of the configuration data files has been selected 304, the configuration data is read 306 from the selected configuration data file. For example, the configuration data is read from the selected configuration data file by the client module 102 through the interfaces 104, 204 and the controller 202 of the smart card 200. The configuration data has various configuration data types (content types) that serve to categorize the configuration data. Next, the configuration data types of the configuration data are compared 308 to the configuration control information. More particularly, the configuration data read from the selected configuration data file includes configuration data types for the configuration data. For example, the configuration data types can include any of carrier proxy, connection provisioning, encryption key, proxy address, address point address, capabilities, etc. These configuration data types are compared 308 against the configuration control information provided by the configuration control file.

A decision 310 then determines whether all of the configuration data types within the configuration data that has been read from the configuration data file are authorized. Here, as a result of the comparing 308, it is determined whether the configuration control information authorizes (or permits) the configuration data types provided in the selected configuration data file. If the decision 310 determines that all of the configuration data types provided in the selected configuration data file are not authorized, the configuration data associated with the unauthorized configuration data types is discarded 312. On the other hand, when all of the configuration data types provided in the selected configuration data file are authorized, the discarding 312 is bypassed because none of the configuration data needs to be discarded. When configuration data is discarded 312, the client device configuration processing 300 can simply silently reject the unauthorized configuration data, notify the user, or report same to a management entity. In any case, following the discarding 312 or following the decision 310 when all the configuration data types are authorized, the remaining configuration data that has been read 306 from the selected configuration data file is stored 314 in local memory for subsequent use by the client device.

A decision 316 then determines whether there is another configuration data file to be processed. Typically, although not necessarily, the smart card 106, 200 includes more than one configuration data file. When the decision 316 determines that there is another configuration data file to be processed, the processing returns to repeat the selecting 304 and subsequent operations to process another of the particular configuration data files. On the other hand, when the decision block 316 determines that all of the configuration data files have been processed, the client device is configured 318 in accordance with the remaining configuration data that has been stored in the local memory. Here, the configuration of the client device operates to provision the client device, i.e., communication device, for access to services provided by a carrier. The carrier can be a wired carrier or a wireless carrier. Following the configuration 318 of the client device, the client device configuration processing 300 is complete and ends.

While the client device configuration processing 300 discussed above with respect to FIGs. 3A and 3B pertains to reading information from a file system, similar processing can be perform prior to writing information to the file system. For example, if configuration data were to be written to a configuration data file, the device writing the data can first determines whether the configuration data file is authorized to store the type of data (e.g., type of configuration data) based on configuration control information provided by the configuration control file. Then, if not authorized, the write of the unauthorized can be prevented, thus saving memory storage capacity of the data storage device and also allowing software to recognize this fact at an earlier stage.

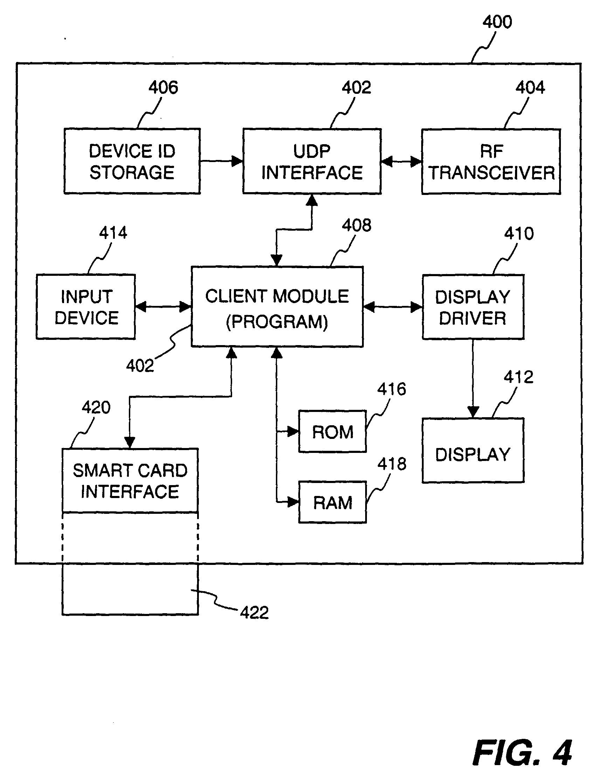

FIG. 4 is a block diagram of a client device 400 according to one embodiment of the invention. The client device 400 can, for example, correspond to client device 100 illustrated in FIG. 1.

The client device 400 includes a Universal Data Protocol (UDP) interface 402 that couples to a carrier network via a radio frequency (RF) transceiver 404 to receive incoming and outgoing signals. A device identifier (ID) storage 406 supplies a device ID to the UDP interface 402. The device ID identifies a specific code that is associated with a particular client device 400. In addition, the client device 400 includes a client module 402 that performs many of the processing tasks performed by the mobile device 400 including establishing a communication session with the carrier network, requesting and receiving data from a computer network (e.g., the Internet), displaying information on a display, and receiving user input. The client module 408 is coupled to the UDP interface 402 for the establishment of a communication session and the requesting and receiving of data. The client module 408 also couples to a display driver 410 that drives a display 412. The client module 408 controls the display driver 410 to display information on the display 412 to the user. Additionally, the client module 408 is coupled to an input device 414, a ROM 416, and a RAM 418. Preferably, among other things, the client module 408 operates a network browser, such as a Handheld Device Markup Language (HDML) web browser. The input device 414 allows a user of the client device 400 to input data and thus make selections in controlling and using the client device 400. The ROM 416 stores predetermined data and processing instructions for the client module 408. The RAM 418 is used to provide temporary data storage such as for incoming and outgoing data.

The client device 400 interacts with a smart card 422 through a smart card interface 420. The smart card 422, upon being inserted into an opening or spot of the client device 400, becomes accessible to the client module 408 via the smart card interface 420. The smart card 422 can provide digital logic and controllers as well as memory storage for data and programming instructions. According to the invention, the smart card 422 stores files containing configuration information (e.g., configuration files). The organization and control over the configuration files as well as the use of these configuration files by the client device 400 have been discussed above.

The invention is preferably implemented in software, but can be implemented in hardware or a combination of hardware and software. The invention can also be embodied as computer readable code on a computer readable medium. The computer readable medium is any data storage device that can store data which can be thereafter be read by a computer system. Examples of the computer readable medium include read-only memory, random-access memory, CD-ROMs, magnetic tape, optical data storage devices, carrier waves. The computer readable medium can also be distributed over a network coupled computer systems so that the computer readable code is stored and executed in a distributed fashion.

The advantages of the invention are numerous. Different embodiments or implementations may yield one or more of the following advantages. One advantage of the invention is that access to data stored in data files can be controlled using one or more control files to define what type of data is permitted in the data files. Another advantage of the invention is that an electronic device (e.g., communication device) can use data files to store configuration information for the device and thus allow update to the configuration of the device by altering the data stored in one or more of the data files in a controlled manner. Still another advantage of the invention is that the invention facilitates configuring or reconfiguring an electronic device (e.g., communication device) after its manufacture or sale. Yet another advantage of the invention is that generic files can be used to store the necessary configuration data in a flexible and secure manner. Another advantage of the invention is that configuration responsibilities can be shared by user and administrator.

Further, the invention enhances user trust in the communication device because the controlled file access and content type control makes it unlikely that its configuration has been tampered with. The invention is also advantageous in providing a communications carrier with greater control over the configuration of the communication device.

The many features and advantages of the present invention are apparent from the written description and, thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. A method for providing secure access to data stored in electronic files, the electronic files including at least one control file and at least one data file, said method comprising:
(a) reading file control information from the control file;
(b) reading data from the data file, the data having a data type associated therewith;
(c) determining, based on the file control information, whether the data file is authorized to include the data type of the data read therefrom; and
(d) discarding the data of the data type read from the data file when said determining step (c) determines that the data file is not authorized to include the data type.

2. A method as recited in claim 1 wherein said method further comprises:-
(e) utilizing any of the data read from the data file that has not been discarded.

3. A method as recited in claim 2 wherein said utilizing step (e) comprises configuring a wireless communication device in accordance with any of the data read from the data file that has not been discarded.

4. A method as recited in claim 3 wherein said configuring of the wireless communication device comprises provisioning the wireless communication device for operation with a wireless carrier.

5. A smart card for use with a communication device, the smart card comprising:-
a file system including a plurality of data files and a control file; and
a controller operatively connected to said file system, said controller operating to provide the communication device with access to said file system;
wherein access privileges to the control file are limited, and wherein the control file includes control information that defines particular types of information that are authorized to be stored in the data files.

6. A smart card as recited in claim 5 wherein the communication device reads information from the data files and then, before using any of the information, discards that portion of the information that pertains to a type of information not authorized to be stored in the respective data files.

7. A file access control system for a file system, said file access control system comprising:-
a plurality of data files, each of said data files capable of storing one or more data items;
a control file describing authorized data items with respect to each of said data files; and
an interface that enables a processing unit to access said plurality of data files and said control file.

8. A file access control system as recited in claim 7 wherein said file access control system is provided in a wireless communication device that includes the file system.

9. A data storage device for use with an electronic device, the data storage device comprising:-
a plurality of data files; and
a control file;
wherein access privileges to the control file are limited, and wherein the control file includes control information that defines particular types of information that are authorized to be stored in the data files.

10. A data storage device as recited in claim 9 wherein the electronic device reads information from the data files and then, before using any of the information, discards that portion of the information that pertains to a type of information not authorized to be stored in the respective data files.
